# EUROPEAN PATENT APPLICATION

(11) **EP 2 466 679 A1**
(43) Date of publication of application: **20.06.2012**
(21) Application number: 11742232.9
(22) Date of filing: 09.02.2011
(51) Int. Cl.: H01M 10/39, H01M 2/02

(54) **MOLTEN SALT BATTERY**

(30) Priority: 12.02.2010 JP 2010029058
(71) Applicant: Sumitomo Electric Industries, Ltd., Osaka-shi, Osaka 541-0041 (JP)
(72) Inventor: SAKAI, Shoichiro, Osaka-shi Osaka 554-0024 (JP); MAJIMA, Masatoshi, Osaka-shi Osaka 554-0024 (JP); NITTA, Koji, Osaka-shi Osaka 554-0024 (JP); HIRAIWA, Chihiro, Osaka-shi Osaka 554-0024 (JP); FUKUNAGA, Atsushi, Osaka-shi Osaka 554-0024 (JP); INAZAWA, Shinji, Osaka-shi Osaka 554-0024 (JP)
(74) Representative: Cross, Rupert Edward Blount
(86) International application number: PCT/JP2011/052681
(87) International publication number: WO 2011/099489

(57) **Abstract**

Provided is a molten salt battery which can be stably charged and discharged. A separator 3 composed of a rectangular plate-shaped glass cloth and containing a molten salt is interposed between a positive electrode 1 and a negative electrode 2 having a rectangular plate shape to form a power generating element X. A battery container 5 is configured to be substantially rectangular parallelepiped-shaped. A non-flexible presser plate 4b pressed by a spring 4a arranged at a negative electrode 2 side in the battery container 5 substantially evenly disperses pressing force from the spring 4a and presses the negative electrode 2 downward. As a result of the reaction, a bottom wall 52 of the battery container presses the positive electrode 1 upward so that no dead space is generated even when a plurality of batteries are combined.

## Description

### Technical Field

The present invention relates to a molten salt battery that includes a power generating element including a positive electrode, a negative electrode, and a separator containing a molten salt, and a battery container for housing the power generating element.

### Background Art

In recent years, power generation that utilizes energy of nature, such as solar light, wind power, etc., has been actively pursued. Power generation by energy of nature is frequently affected by weather and climate and the amount of power generated cannot be adjusted to meet the electric power demand. Thus, leveling of electric power supply with respect to the load is indispensable. In order to achieve electric power leveling, the electrical energy needs to be discharged and charged. To achieve this, sodium-sulfur batteries that offer high energy density and high efficiency have been used in some cases. In sodium sulfur batteries in an operation status, sulfur and sodium polysulfide acting as a positive electrode active material and sodium acting as a negative electrode active material are molten at high temperature, and measures must be taken to prevent rapid reactions caused by mixing of these active materials in case a solid electrolyte interposed between the two active materials fails. Sodium-sulfur batteries are often prepared by combining a plurality of single cells to achieve high capacities.

For example, Patent Literature 1 discloses a technique with which the interior and exterior of a safety pipe placed in a cylindrical-bag-shaped solid electrolyte having sodium ion permeability are filled with a flow resisting member to decrease the flow rate of sulfur flowing into the molten sodium electrode via cracks in the safety pipe and to decrease the rate of sulfur and sodium sulfide entering the interior of the safety pipe in case the safety pipe fails due to high-temperature corrosion. Patent Literature 2 discloses a technique with which a large number of sodium sulfur batteries are compartmented into a plurality of battery blocks and each battery block is removably housed in a heat-insulating container so that installation of single cells during assembly and removal and installation of the single cells from and into heat-insulating containers are simplified during maintenance and inspection. Patent Literature 3 discloses a technique of providing a passage groove for an active material in the bottom of a containing container that contains single cells of a sodium-sulfur battery so that the active material that has leaked from the single cells is safely stored.

According to sodium-sulfur batteries disclosed in Patent Literatures 1 to 3, molten sodium is contained in a containing container composed of an alumina ceramic used as a solid electrolyte and the shape of the containing container is inevitably cylindrical in order to compensate the mechanical brittleness derived from the use of ceramics. Accordingly, when a plurality of single cells are combined, dead spaces occur at a particular percentage irrespective to the diameter of the containing container and this decreases the energy density by a particular fraction.

In contrast, Patent Literature 4 discloses a molten salt battery in which a separator is impregnated with an electrolyte containing a molten salt to immobilize the electrolyte and the separator is held between a positive electrode and a negative electrode so that a containing container for an active material is no longer needed.

### Citation List

### Patent Literature

PTL 1: Japanese Unexamined Patent Application Publication No. 2-040866
PTL 2: Japanese Unexamined Patent Application Publication No. 7-022066
PTL 3: Japanese Unexamined Patent Application Publication No. 7-014606
PTL 4: Japanese Unexamined Patent Application Publication No. 2007-273362

### Summary of Invention

### Technical Problem

However, according to the technique disclosed in Patent Literature 4, pressing force from the positive and negative electrodes to the separator changes as the positive and negative electrodes expand and contract during discharging and charging and thus the amount of cations intercalated or deposited at the positive and negative electrodes also changes, resulting in discharge/charge instability in some cases.

The present invention has been made under these circumstances. An object thereof is to provide a molten salt battery that can be discharged and charged stably and offer high space efficiency and high energy density.

### Solution to Problem

A molten salt battery according to the present invention includes a power generating element in which a separator containing a molten salt is interposed between a positive electrode and a negative electrode, and a battery container for housing the power generating element. A pressing member is provided on at least one of the positive electrode side and the negative electrode side in the battery container and the pressing member is configured to press the power generating element.

According to the present invention, the pressing member in the battery container presses the power generating element from the positive electrode and negative electrode sides. Thus, when the positive and negative electrodes expand and contract in a thickness direction by discharging and charging, the pressing force from the positive and negative electrodes to the separator is maintained substantially constant.
Moreover, since the separator containing a molten salt is interposed between the positive and negative electrodes of the power generating element and is housed in the battery container, the shape of the separator can be matched with the shape of the positive and negative electrodes. Thus, the degree of freedom in determining the shape of the battery container is enhanced.

A molten salt battery according to the present invention includes a power generating element in which a separator containing a molten salt is interposed between a positive electrode and a negative electrode, and a battery container for housing the power generating element, wherein the battery container is a cylindrical body having an axial direction coincident with a direction in which the positive electrode and the negative electrode face each other; and a bending portion that bends in a circumferential direction and expands and contracts with expansion and contraction of the power generating element in the axial direction is formed on a peripheral surface of the cylindrical body.

According to the present invention, the bending portion provided in the circumferential direction of the peripheral surface of the battery container having an axial direction coincident with the direction in which the positive and negative electrodes face each other is bent, and expands and contracts in response to the expansion and contraction of the power generating element in the axial direction. Thus, when the positive and negative electrodes expand and contract by discharging and charging, the pressing force from the positive and negative electrodes to the separator is maintained substantially constant.
Moreover, since the separator containing a molten salt is interposed between the positive and negative electrodes of the power generating element and is housed in the battery container and the separator can be formed into any shape, the degree of freedom in determining the shapes of the power generating element and battery container is enhanced.

A molten salt battery according to the present invention includes a power generating element in which a separator containing a molten salt is interposed between a positive electrode and a negative electrode, and a battery container for housing the power generating element, wherein the battery container is configured to press the power generating element from at least one of the positive electrode side and the negative electrode side.

According to the present invention, the power generating element is pressed from the positive and negative electrode sides by the elastic force of at least one of the surfaces of the battery container at the positive and negative electrode sides. Thus, when the positive and negative electrodes expand and contract by discharging and charging, the pressing force from the positive and negative electrodes to the separator is maintained substantially constant.
Moreover, since the separator containing a molten salt is interposed between the positive and negative electrodes of the power generating element and is housed in the battery container and the separator can be formed into any shape, the degree of freedom in determining the shapes of the power generating element and battery container is enhanced.

The molten salt battery according to the present invention is **characterized in that** the battery container has a convex curve at an inner side on at least one of the positive electrode side and the negative electrode side.

In the present invention, a pressing stroke to the power generating element is ensured by the convex curve formed on the inner side of at least one of the positive electrode side and the negative electrode side of the battery container. Thus, the power generating element is firmly pressed by the battery container.

The molten salt battery according to the present invention is **characterized in that** the battery container has a plurality of pressing pieces on an inner side of at least one of the positive electrode side and the negative electrode side so as to protrude therefrom.

In the present invention, a pressing stroke to the power generating element is ensured by the plurality of pressing pieces formed to protrude from the inner side of at least one of the positive electrode side and the negative electrode side of the battery container. Thus, the power generating element is firmly pressed by the battery container.

The molten salt battery according to the present invention includes a transmission member that disperses and transmits pressing force and that is provided on at least one of the positive electrode side and the negative electrode side.

In the present invention, since the pressing force is dispersed and transmitted to the power generating element by the transmission member provided on at least one of the positive electrode side and the negative electrode side, the degree of dispersion of the pressing force to the power generating element is adequately controlled.

The molten salt battery of the present invention is **characterized in that** the transmission member has non-flexibility and is configured to press at least one of the positive electrode side and the negative electrode side by being urged by the pressing member, the convex curve, or the pressing pieces.

In the present invention, the non-flexible transmission member is being pressed from the battery container side to press at least one of the positive electrode side and the negative electrode side. Thus, the pressing force to the positive electrode and the negative electrodes is substantially evenly dispersed. Accordingly, deformation (folds) rarely occurs in the positive electrode and the negative electrode, and the reactions at the positive electrode and the negative electrode progress substantially evenly during discharging and charging.

The molten salt battery according to the present invention is **characterized in that** the battery container is electrically connected to the positive electrode or the negative electrode.

In the present invention, since the battery container is electrically connected to the positive electrode (or negative electrode), the battery container can be used as a positive electrode terminal (or negative electrode terminal) of the battery.

The molten salt battery according the present invention is **characterized in that** the battery container is formed by joining a first container half body on which a rib is formed on the positive electrode side or the negative electrode side to a second container half body.

In the present invention, since a rib is formed on at least one of the container half bodies, a sufficient mechanical strength is ensured even when the thickness of the container half bodies is reduced.

The molten salt battery according to the present invention is **characterized in that** a plurality of compartments are formed in the battery container by the rib, and the power generating element is disposed in each of the plurality of compartments.

In the present invention, the interior of the battery container is divided into a plurality of compartments by the rib and a power generating element is disposed in each compartment.
Since a plurality of power generating elements are separately arranged in one battery container, the power generating elements in the battery container may be connected to each other in series, in parallel, or in series and parallel so as to increase the voltage, capacity, or voltage and capacity of the battery. Moreover, since expansion of each power generating element in a direction toward the rib is restrained by the rib, the power generating elements are safely housed in the respective compartments in the battery container.

The molten salt battery according to the present invention is **characterized in that** the first container half body and the second container half body are electrically insulated from each other, and the first container half body is electrically connected to one of the positive electrode and the negative electrode and the second container half body is electrically connected to the other one of the positive electrode and the negative electrode.

In the present invention, since one of the container half bodies electrically isolated from each other is connected to the positive electrode and the other is connected to the negative electrode, the two container half bodies may be respectively used as the positive electrode terminal and the negative electrode terminal of the battery.

The molten salt battery according to the present invention is **characterized in that** the battery container has a container main body having one side of a peripheral surface open and having an axial direction coincident with a direction in which the positive electrode and the negative electrode face each other, and a lid that seals an opening of the container main body.

In the present invention, a container main body has one side of a peripheral surface open and has an axial direction coincident with the direction in which the positive electrode and the negative electrode face each other and the opening is sealed with a lid. Thus, the size of the portion of the opening for placing the power generating element in the battery container can be reduced.
As a result, for example, the size of an O-ring for sealing the portion of the opening can be reduced and the efficiency of housing the power generating element in the battery container is enhanced.

The molten salt battery according to the present invention is **characterized in that** a power generating element group constituted by stacking a plurality of power generating elements is housed.

In the present invention, since a power generating element group obtained by stacking positive electrodes and negative electrodes with separators therebetween substitutes the power generating element, a high-voltage battery is obtained. When positive electrode collectors and negative electrode collectors typically included in the positive electrodes and the negative electrodes are composed of the same metal, risk of electrical corrosion can be eliminated.

The molten salt battery according to the present invention is **characterized in that** the power generating element is constituted by winding the positive electrode, the separator, and the negative electrode.

In the present invention, since a power generating element group constituted by winding a positive electrode and a negative electrode with a separator therebetween is used as one power generating element, a high-capacity battery is obtained.

### Advantageous Effects of Invention

According to the present invention, since the power generating element is pressed from the positive electrode side and the negative electrode side, the pressing force from the positive electrode and the negative electrode to the separator can be maintained substantially constant even when the positive electrode and the negative electrode expand and contract in the thickness direction during discharging and charging. This prevents fluctuation of the amounts of cations intercalated or deposited at the positive electrode and the negative electrode. The same applies when the battery container is filled with gas and deformed. Since the separator that contains a molten salt can be formed into a desired shape, the degree of freedom in determining the shape of the power generating element in which a separator is interposed between a positive electrode and a negative electrode, and the shape of the battery container is enhanced.
Accordingly, stable discharge and charge is enabled, and the space efficiency is improved and the energy density is increased by using flat-plate-shaped separator, positive electrode, and negative electrode, and a rectangular parallelepiped shaped battery container. Brief Description of Drawings

[Fig. 1] Figure 1 is a schematic longitudinal cross-sectional view of a molten salt battery according to Embodiment 1 of the present invention.
[Fig. 2] Figure 2 is a schematic longitudinal cross-sectional view of a molten salt battery according to Embodiment 2 of the present invention.
[Fig. 3] Figure 3 is a schematic longitudinal cross-sectional view of a molten salt battery according to Embodiment 3 of the present invention.
[Fig. 4] Figure 4 is a schematic longitudinal cross-sectional view of a molten salt battery according to Embodiment 3 of the present invention.
[Fig. 5] Figure 5 is a schematic exploded perspective view of a battery container of a molten salt battery according to Embodiment 4 of the present invention.
[Fig. 6A] Figure 6A is a schematic plan view of a container half body of a molten salt battery according to Embodiment 5 of the present invention.
[Fig. 6B] Figure 6B is a schematic front cross-sectional view of a container half body of a molten salt battery according to Embodiment 5 of the present invention.
[Fig. 7A] Figure 7A is a schematic plan view of another container half body.
[Fig. 7B] Figure 7B is a schematic front cross-sectional view of another container half body.
[Fig. 8] Figure 8 is a schematic longitudinal cross-sectional view of a molten salt battery according to Embodiment 6 of the present invention.

### Description of Embodiments

The present invention will now be described in detail with reference to the drawings that illustrate embodiments. In the drawings, the same elements are denoted by the same reference characters and explanation is omitted to avoid redundancy. The scale of the drawings is not necessarily coincident with the description.
In the embodiments described below, molten salt batteries that embody the present invention are described as examples and the molten salt battery of the present invention is not limited to the batteries below. Furthermore, this specification does not limit the members recited in the Claims to the members described in the embodiments.

### (Embodiment 1)

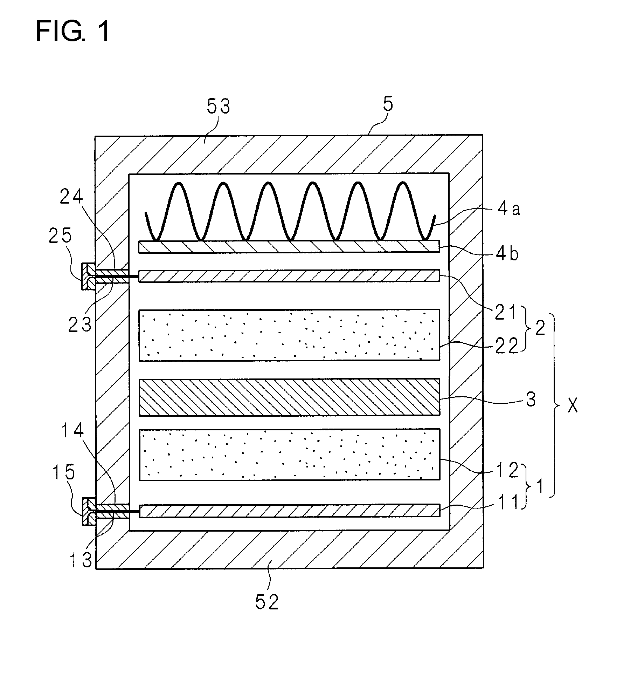

Figure 1 is a schematic longitudinal cross-sectional view of a molten salt battery according to Embodiment 1 of the present invention. In the drawing, 5 denotes a battery container composed of aluminum. The battery container 5 has a substantially rectangular parallelepiped shape and is hollow. Each of the inner surfaces of the battery container 5 is subjected to insulating treatment by fluorine coating. A power generating element X in which a separator 3 composed of glass cloth is interposed between a positive electrode 1 and a negative electrode 2 having a rectangular flat plate shape is housed in the battery container 5 with the positive electrode 1 being arranged on the lower side. A spring (pressing member) 4a formed of a metal wavy plate is disposed between a top wall 53 of the battery container 5 and the negative electrode 2. The spring 4a urges a flat presser plate (transmission member) 4b composed of an aluminum alloy having non-flexibility to press the negative electrode 2 downward, and as a result the positive electrode 1 is pressed upward from the upper surface of a bottom wall 52 of the battery container 5 due to the reaction. The spring 4a is not limited to a metal spring or the like and may be an elastic body such as rubber.

The positive electrode 1 is formed by applying a positive electrode material 12, which contains a positive electrode active material NaCrO2 and a binder, to a positive electrode collector 11 composed of aluminum and having a rectangular plate shape. The positive electrode active material is not limited to NaCr02. The negative electrode 2 is formed by plating a rectangular-plate-shaped negative electrode collector 21 composed of aluminum with a negative electrode material 22 containing a negative electrode active material, tin. The negative electrode active material is not limited to tin. For example, tin may be replaced by silicon or indium. In plating the negative electrode collector 21 with the negative electrode material 22, a substrate is first plated with zinc to conduct a zincate treatment (zinc-substitution treatment) and then tin plating is conducted. The negative electrode 2 may be formed by applying a mixture of tin powder and a binder to the negative electrode collector 21. The positive electrode collector 11 and the negative electrode collector 21 are not limited to aluminum and may be stainless steel, for example. The separator 3 is impregnated with an electrolyte. In Embodiment 1, a molten salt constituted by an anion of bis(fluorosulfony)imide (FSI) or bis(trifluoromethylsulfonyl)imide (TFSI) and a cation of sodium, potassium, or sodium and potassium is used as the electrolyte.

An end of the positive electrode collector 11 and an end of the negative electrode collector 21 are respectively connected to a positive electrode terminal 15 and a negative electrode terminal 25 provided to protrude from the outer side of one side surface of the battery container 5 via lead wires 13 and 23. The lead wires 13 and 23 are inserted into hollow insulating members 14 and 24 fitted in fitting holes formed in the one side surface of the battery container 5 so as to be insulated from the battery container 5.
Note that in Fig. 1, although the battery container 5, the power generating element X, the presser plate 4b, and the spring 4a are illustrated as being housed in the battery container 5 with gaps therebetween, these components are housed without gap and make contact with each other in a vertical direction in an actual battery (the same applies hereinafter). Similarly, the positive electrode 1 and the separator 3 are in contact with each other without any gap in the battery element X and so are the separator 3 and the negative electrode 2 (the same applies hereinafter).

In the structure described above, when the battery is charged by applying a positive voltage to the positive electrode terminal 15 relative to the negative electrode terminal 25 from outside, sodium ions migrate from the positive electrode 1 to the negative electrode 2 through the separator 3. As a result, the positive electrode material 12 and the negative electrode material 22 expand. In contrast, when a load is connected to the outside between the positive electrode terminal 15 and the negative electrode terminal 25 to conduct discharging, sodium ions migrate from the negative electrode 2 to the positive electrode 1 and the positive electrode material 12 and the negative electrode material 22 contract. Accordingly, the power generating element X changes the volume along with discharging and charging and expands and contracts in the vertical direction.
Even when the power generating element X expands and contracts in the vertical direction during discharging and charging, the displacement in the vertical direction that occurs in the presser plate 4b and that is caused by negative electrode 2 is absorbed by the spring 4a contracting and expanding in the vertical direction. Thus, the pressing force of the spring 4a pressing the negative electrode 2 through the presser plate 4b is maintained substantially constant.

In sum, according to Embodiment 1, the power generating element is pressed from the positive electrode side and the negative electrode side by the pressing force of the spring provided on the negative electrode side and the reaction from the bottom wall of the battery container. Thus, even when the positive electrode and the negative electrode expand and contract in the thickness direction during discharging and charging, the pressing force from the positive electrode and the negative electrode to the separator is maintained substantially constant. Moreover, a power generating element is made by interposing a separator containing a molten salt and composed of a rectangular plate-shaped glass cloth between the rectangular plate-shaped positive and negative electrodes and the battery container is substantially rectangular parallelepiped shaped to match the shape of the power generating element. Thus, the space efficiency is enhanced. Accordingly, stable discharging and charging are enabled and the energy density can be increased.

Since the presser plate provided on the negative electrode side allows the pressing force to be dispersed and transmitted from the spring to the power generating element, the degree of dispersion of the pressing force to the power generating element can be adequately controlled.

Furthermore, since the non-flexible presser plate presses the negative electrode as it is pressed from the top wall side of the battery container, the pressing force to the positive electrode and the negative electrode is substantially evenly dispersed. Accordingly, deformation (folds) rarely occurs in the positive electrode and the negative electrode, and the reactions at the positive electrode and the negative electrode can be substantially evenly proceeded during discharge and charge.

### (Embodiment 2)

Whereas Embodiment 1 concerns the power generating element X pressed by the elastic force of the spring 4a, Embodiment 2 concerns a power generating element X pressed by bending and stretching of a bending portion formed on a peripheral surface of a battery container.

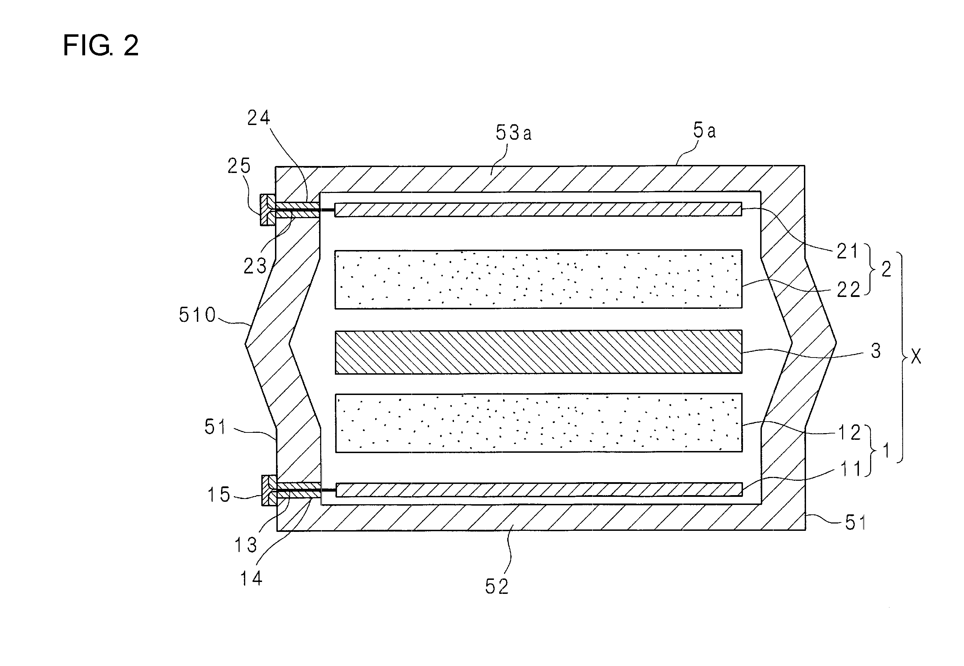

Figure 2 is a schematic longitudinal cross-sectional view of a molten salt battery according to Embodiment 2. In the drawing, 5a denotes a battery container composed of aluminum. The battery container 5a is short and hollow and has a substantially quadrangular prism shape.
In the battery container 5a, a bending portion 510 outwardly bent is formed on a peripheral surface 51 having a rounded edge and extends in the circumferential direction. Each of the inner surfaces is subjected to an insulating treatment by fluorine coating. A power generating element X in which a separator 3 composed of glass cloth is interposed between a positive electrode 1 and a negative electrode 2 having a rectangular flat plate shape is housed in the battery container 5a with the positive electrode 1 being arranged on the lower side. A positive electrode collector 11 and a negative electrode collector 21 of the power generating element X are respectively in contact with the upper surface of a bottom wall 52 and a lower surface of a top wall 53a of the battery container 5a. The bottom wall 52 and the top wall 53a of the battery container 5a are respectively urged upward and downward by the elastic force from the bending portion 510. Thus, the positive electrode 1 and the negative electrode 2 are respectively pressed upward and downward from the bottom wall 52 and the top wall 53a of the battery container 5a.

In the structure described above, even when the power generating element X expands and contracts in the vertical direction during discharging and charging, the fluctuation of the distance between the positive electrode 1 and the negative electrode 2, i.e., the fluctuation of the distance between the bottom wall 52 and the top wall 53a of the battery container 5a is absorbed by the bending portion 510 expanding and contracting in the vertical direction. Thus, the pressing force of the bottom wall 52 and the top wall 53a of the battery container 5a respectively pressing the positive electrode 1 and the negative electrode 2 is maintained substantially constant.
Other features that correspond to Embodiment 1 are denoted by the same reference numerals and the detailed description therefor is omitted.

In sum, according to Embodiment 2, the bending portion bent outward extending in the circumferential direction of the peripheral surface of the battery container expands and contracts in response to the expansion and contraction of the power generating element in the vertical direction. Thus, even when the positive electrode and the negative electrode expand and contract in the thickness direction during discharging and charging, the pressing force from the positive electrode and the negative electrode to the separator is maintained substantially constant. Moreover, the separator composed of glass cloth is interposed between the positive electrode and the negative electrode having a rectangular plate shape similar to that of the separator to make a power generating element and the battery container is substantially rectangular parallelepiped shaped to match the shape of the power generating element. Thus, the space efficiency is enhanced.
Accordingly, stable discharge and charge are enabled and the energy density can be increased.

Note that in Embodiment 2, an example in which only one (one continuous) bending portion 510 is formed on the peripheral surface 51 in the circumferential direction is illustrated. Alternatively, two or more bending portions 510 may be provided on the peripheral surface 51 in the circumferential direction. Instead of a simple bending portion, a bellows that has mountain folding portions and valley folding portions alternately appearing in the circumferential direction of the peripheral surface 51 may be provided.
In order to prevent the bending portion 510 from contacting the power generating element, the bending portion 510 is preferably bent outward.

### (Embodiment 3)

Whereas Embodiment 1 concerns the power generating element X pressed by the elastic force of the spring 4a, Embodiment 3 concerns a power generating element X pressed by elastic force of a top wall of a battery container.

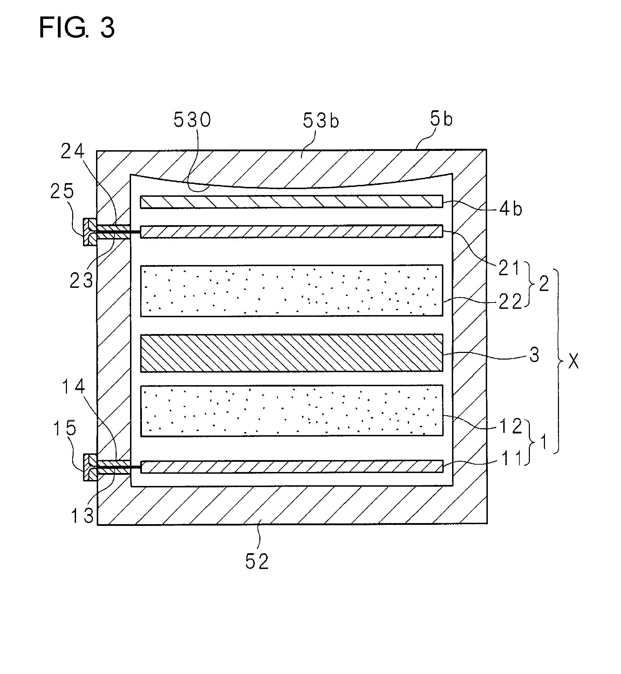

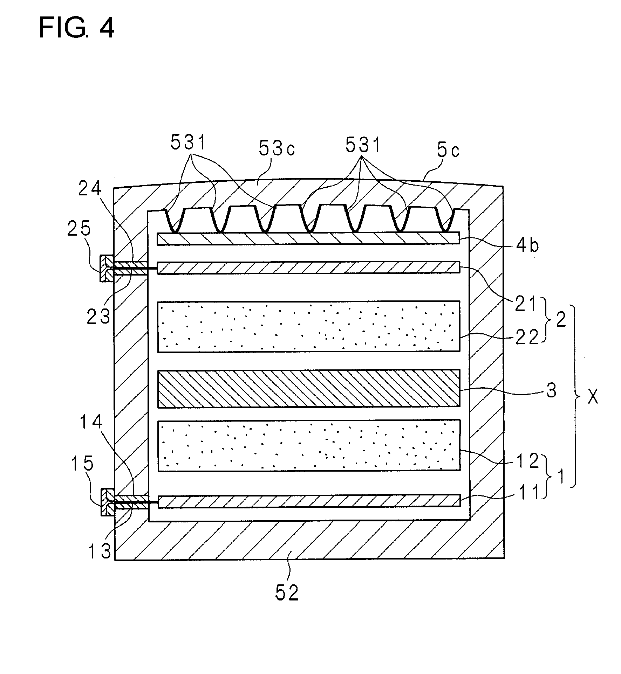

Figures 3 and 4 are schematic longitudinal cross-sectional views of molten salt batteries according to Embodiment 3. In the drawings, 5b and 5c each denote a battery container composed of aluminum. The battery containers 5b and 5c have a substantially rectangular parallelepiped shape and are hollow. In the battery container 5b, a convex curve 530 is formed in the lower surface of a top wall 53b. In the battery container 5c, a plurality of pressing pieces 531 are provided to protrude from the lower surface of a top wall 53c. Each of the inner surface of the battery containers 5b and 5c is subjected to an insulating treatment by fluorine coating. A power generating element X in which a separator 3 composed of glass cloth is interposed between a positive electrode 1 and a negative electrode 2 having a rectangular flat plate shape is housed in each of the battery container 5b and 5c with the positive electrode 1 being arranged on the lower side. Positive electrode collectors 11 of the power generating elements X are in contact with the upper surfaces of bottom walls 52 of the battery containers 5b and 5C, and presser plates 4b are respectively interposed between the top wall 53b of the battery container 5b and a negative electrode collector 21 and between the top wall 53c of the battery container 5c and a negative electrode collector 21. The presser plates 4b urged by the elastic force of the top wall 53b and the top wall 53c of the battery containers 5b and 5c press the negative electrodes 2 downward and as a result the positive electrodes 1 are pressed upward from the upper surfaces of the bottom walls 52 of the battery containers 5b and 5c due to the reaction.

In the structure described above, even when the power generating element X expands and contracts in the vertical direction during discharging and charging, the displacement of the presser plate 4b in the vertical direction caused by the negative electrode 2 is absorbed by deflection of the top walls 53b and 53c in the vertical direction. Thus, the pressing force of the top walls 53b and 53c respectively pressing the negative electrodes 2 via the presser plates 4b is maintained substantially constant. While the top walls 53b and 53c deflect upward, the convex curve 530 and the pressing pieces 531 respectively formed on the lower surfaces of the top walls 53b and 53c serve as pressing strokes for the presser plates 4b. Thus, the negative electrodes 2 are firmly pressed downward through the presser plates 4b by adequately setting the curvature of the convex curve 530 and the heights of the pressing pieces 531.

In sum, according to Embodiment 3, the power generating element is pressed from the positive electrode side and the negative electrode side due to the elastic force of the top wall of the battery container and the reaction from the bottom wall of the battery container. Thus, even when the positive electrode and the negative electrode expand and contract in the thickness direction during discharging and charging, the pressing force from the positive electrode and the negative electrode to the separator is maintained substantially constant. Moreover, the separator composed of glass cloth is interposed between the positive electrode and the negative electrode having a rectangular plate shape similar to that of the separator to make a power generating element and the battery container is substantially rectangular parallelepiped shaped to match the shape of the power generating element. Thus, the space efficiency is enhanced.
Accordingly, stable discharge and charge are enabled and the energy density can be increased.

The pressing stroke to the power generating element is ensured by the convex curve formed on the inner side of the negative electrode side of the battery container or by a plurality of pressing pieces formed to protrude from the inner side of the negative electrode side of the battery container. Thus, the power generating element can be firmly pressed from the battery container.

Note that in Embodiment 3, the presser plates 4b urged by the elastic force of the top walls 53b and 53c press the negative electrodes 2 downward. Alternatively, the positive electrode 1 may be pressed upward by the elastic force of the bottom wall 52. In such a case, a convex curve or pressing pieces may be formed on the upper surface side of the bottom wall 52.

Alternatively, at least one of the top wall 53 and the bottom wall 52 of the battery container 5 in Embodiment 2 may be formed as the top wall 53b or top wall 53c in Embodiment 3 so that at least one of the top wall 53 and the bottom wall 52 further presses at least one of the negative electrode 2 and the positive electrode 1 through the presser plate 4b.

### (Embodiment 4)

Whereas Embodiment 1 concerns an embodiment in which the position of a portion of the opening for housing the power generating element X in the battery container 5 is not clearly described, Embodiment 4 concerns an embodiment in which an opening is formed in one side of the peripheral surface of a battery container and the power generating element X having a negative electrode 2 and a positive electrode 1 on the upper and lower sides is placed through the opening.

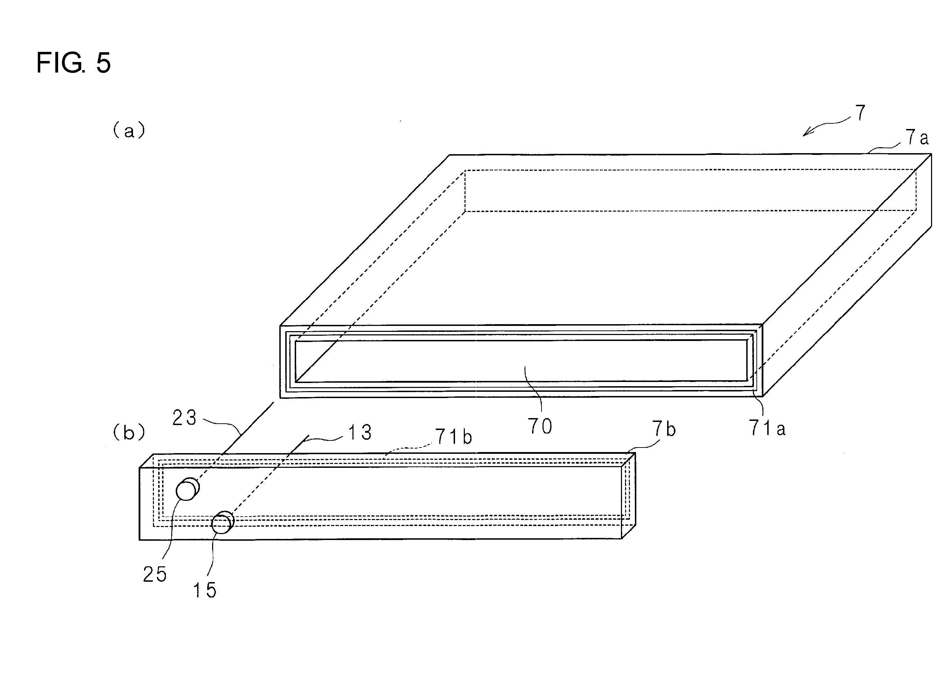

Figure 5 is a schematic exploded-perspective view of a battery container 7 of a molten salt battery according to Embodiment 4. The battery container 7 is composed of aluminum having a substantially rectangular parallelepiped shape and is hollow. The battery container 7 includes a container main body 7a having an opening 70 in one side surface (one of the peripheral surfaces) and a lid 7b for sealing the opening 70, the lid 7b being composed of aluminum. The inner sides of the container main body 7a and the lid 7b are subjected to an insulating treatment by fluorine coating. Ring grooves 71a and 71b for holding an O-ring not shown in the drawing are provided around fitting surfaces of the container main body 7a and the lid 7b.

The power generating element X of Embodiment 1 shown in Fig. 1, and a spring 4a and presser plate 4b that press the power generating element X from above are housed in the battery container 7 so that the positive electrode 1 is arranged on the lower side.
When the power generating element X is housed in the battery container 7, one end of a positive electrode collector 11 and one end of a negative electrode collector 21 are arranged to respectively connect with a positive electrode terminal 15 and a negative electrode terminal 25, which are formed to protrude from the front surface side of the lid 7b, through lead wires 13 and 23. In Fig. 5, the insulating members 14 and 24 are omitted.

Alternatively, at least one of the top wall and the bottom wall of the container main body 7a may be formed as the top wall 53b or the top wall 53c of Embodiment 3 so that at least one of the top wall and the bottom wall presses at least one of the negative electrode 2 and the positive electrode 1 through the presser plate 4b. Yet alternatively, part of the peripheral surface of the battery container 7 may be bent as with the bending portion 510 shown in Embodiment 2.

In sum, according to Embodiment 4, one of the peripheral surfaces of the battery container is opened to form a container main body and the opening is sealed with a lid. Thus, the size of the portion of the opening for placing the power generating element in the battery container can be reduced.
As a result, for example, the O-ring for sealing the portion of the opening can be made smaller and the efficiency of housing the power generating element in the battery container can be enhanced.

### (Embodiment 5)

Whereas Embodiment 4 concerns an embodiment in which the power generating element X is placed from the opening 70 formed in one side of the peripheral surface of the battery container 7, Embodiment 5 concerns an embodiment in which a plurality of power generating elements X are housed in a battery container constituted by two container half bodies.

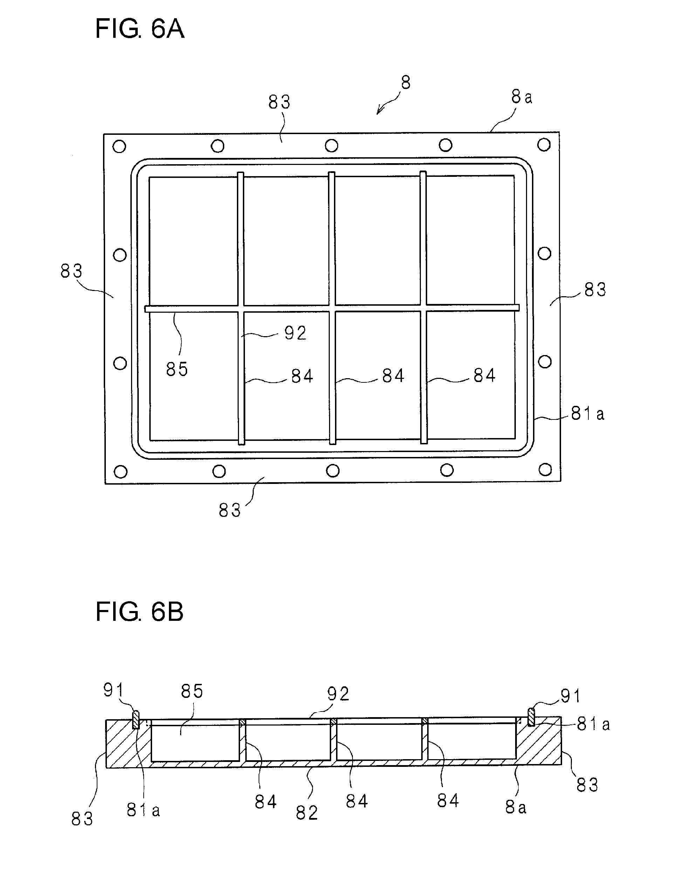

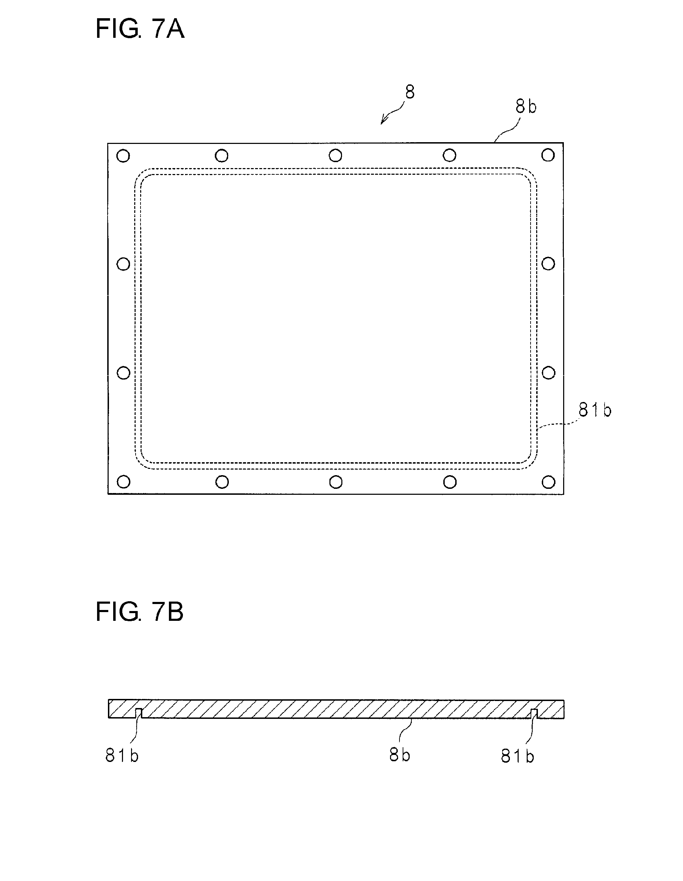

Figure 6A is a schematic plan view of a container half body of the molten salt battery according to Embodiment 5 of the present invention and Fig. 6B is a schematic front cross-sectional view of the container half body. Figure 7A is a schematic plan view of another container half body and Fig. 7B is a schematic front cross-sectional view of this another container half body. In the drawings, 8 denotes a battery container. The battery container 8 includes a container half body 8a having a rectangular shape in a plan view and being constituted by a bottom plate portion 82 and a side plate portion 83 surrounding the bottom plate portion 82; and another container half body 8b that has a rectangular plate shape in a plan view and is configured to fit the container half body 8a with an O-ring 91 therebetween. The container half bodies 8a and 8b are both composed of aluminum. Ring grooves 81a and 81b for holding the O-ring 91 are formed around fitting surfaces of the container half bodies 8a and 8b.

Three ribs 84 are formed upright on the bottom plate portion 82 of the container half body 8a so as to partition the bottom plate portion 82 in a transversal direction from the front-surface-side side plate portion 83 to the back-surface-side side plate portion 83 at regular intervals. A rib 85 is formed upright on the bottom plate portion 82 from one side of the side plate portion 83 to the other side of the side plate portion 83 so as to partition the bottom plate portion 82 in an anteroposterior direction at regular intervals. An insulating member 92 having the same width as that of the ribs 84 and 85 are disposed on upper surfaces of the ribs 84 and 85. The height which is the sum of the height of the ribs 84 or 85 and the thickness of the insulating member 92 is adjusted to be substantially the same as the height of the side plate portion 83.

When the container half body 8a is fitted with the container half body 8b, the battery container 8 is compartmented into eight compartments of the same size. The container half body 8a and the container half body 8b are insulated from each other with the O-ring 91 and the insulating member 92. Each compartment houses the power generating element X of Embodiment 1 shown in Fig. 1 and the spring 4a and the presser plate 4b that press the power generating element X from above, with the positive electrode 1 being arranged on the lower side. In this case, the spring 4a and the presser plate 4b are composed of an electrically conductive material so that the positive electrodes 1 of the power generating elements X housed in respective compartments are interconnected with each other through the container half body 8a and so are the negative electrodes 2 through the container half body 8b.

In sum, according to Embodiment 5, ribs are formed on one of the container half bodies of the battery container and thus a mechanical strength can be assured even when the container half bodies are thin.

Since the interior of the battery container is compartmented into eight compartments and the positive electrodes and the negative electrodes of the power generating elements in the respective compartments are interconnected with each other, a thin, high-capacity battery can be obtained. Furthermore, since expansion of the power generating elements in a direction toward the ribs is restrained by the ribs, the eight power generating elements can be safely housed in the respective compartments of the battery container.

Furthermore, since the two container half bodies are insulated from each other with an O-ring and an insulating member and one of the container half body is electrically connected to the positive electrodes and the other to the negative electrodes, the two container half bodies can be used as the negative electrode terminal and the positive electrode terminal of the battery, respectively.

Note that in Embodiment 5, the ribs 84 and 85 are only formed on the container half body 8a, alternatively, ribs may be formed on the container half body 8b also.

Although the positive electrodes 1 of the power generating elements X respectively housed in the eight compartments are interconnected with each other through the container half body 8a and so are the negative electrodes 2 through the container half body 8b, the structure is not limited to this. Alternatively, the power generating elements X in the battery container 8 may be connected in series. In this case, the voltage of the battery can be increased.

### (Embodiment 6)

Whereas Embodiment 1 concerns an embodiment in which a power generating element X having rectangular flat plate-shaped positive and negative electrodes 1 and 2 is housed in the battery container 5, Embodiment 6 concerns an embodiment in which a power generating element prepared by winding a positive electrode, a separator, and a negative electrode is housed in the battery container 5.

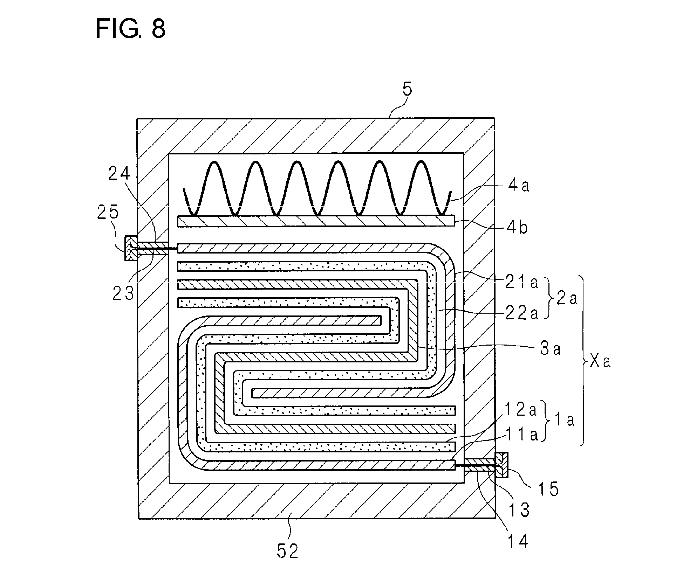

Figure 8 is a schematic longitudinal cross-sectional view of a molten salt battery according to Embodiment 6. A power generating element Xa constituted by winding sheet-shaped positive electrode 1a and negative electrode 2a with a separator 3 a composed of glass cloth therebetween is housed in the battery container 5 with the positive electrode 1a being arranged on the lower side. A spring 4a is provided above the negative electrode 2a in the battery container 5. The spring 4a urges a presser plate 4b to press the negative electrode 2a downward and, as a result of the reaction thereto, the positive electrode 1a is pressed upward from the upper surface of a bottom wall 52 of the battery container 5.

In sum, according to Embodiment 6, since a power generating element group formed by winding a positive electrode and a negative electrode of a sheet shape with a separator therebetween is used as one power generating element, a high-capacity battery can be obtained.

In Embodiment 6, the number of turns the power generating element is wound is less than 1. Alternatively, the number of turns may be 1 or more.

In Embodiments 1 and 6, the spring 4a and the presser plate 4b are provided on the negative electrode 2 or 2a side. Alternatively, they may be provided on the positive electrode 1 or 1a side or on both electrode sides.

In Embodiments 2 to 5, a power generating element X having rectangular flat plate-shaped positive electrode 1 and negative electrode 2 is housed in the battery container. Alternatively, the power generating element Xa described in Embodiment 6 may be housed in the battery container.

In Embodiments 1 to 5, a power generating element X constituted by a set of a positive electrode 1, a separator 3, and a negative electrode 2 is housed in a battery container. Alternatively, a power generating element group may be formed by stacking positive electrodes 1 and negative electrodes 2 with separators 3 therebetween and housed in the battery container.
In this case, since the power generating elements X are connected in series, a high-voltage battery can be obtained. Moreover, in this case, since all of the positive electrode collectors 11 and negative electrode collectors 21 that contact each other are composed of aluminum, the risk of electrical corrosion can be eliminated.

In Embodiments 1 to 5, an insulating treatment is conducted on the inner surfaces of the battery container. However, this is not limiting. For example, the battery container may be electrically connected to the positive electrode 1 (or negative electrode 2).
In this manner, the battery container can be used as the positive electrode terminal (or negative electrode terminal) of the battery.

In Embodiments 1 to 6, the power generating element X or Xa is housed in the battery container while arranging the positive electrode 1 or the positive electrode collector 11a on the lower side. Alternatively, the power generating element X or Xa may be housed upside down in the battery container.

### Industrial Applicability

According to a molten salt battery of the present invention, a power generating element is formed by interposing a separator composed of rectangular plate-shaped glass cloth and containing a molten salt between rectangular plate-shaped positive and negative electrodes; a battery container is substantially rectangular parallelepiped-shaped; a non-flexible presser plate pressed by a spring disposed on the negative electrode side in the battery container substantially evenly disperses the pressing force from the spring and presses the negative electrode downward; and as a result of the reaction thereto, the bottom wall of the battery container presses the positive electrode upward. Thus, no dead space is generated even when a plurality of batteries are used in combination and the molten salt battery is suitable as a molten salt battery that can be stably discharged and charged. Reference Signs List

1, 1a positive electrode
11, 11a positive electrode collector
2, 2a negative electrode
21, 21a negative electrode collector
3 separator
4a spring (pressing member)
4b presser plate (transmission member)
5, 5a, 5b, 5c battery container
51 peripheral surface
510 bending portion
530 convex curve
531 pressing piece
7 battery container
7a container main body
7b lid
70 opening
8 battery container
8a, 8b container half body
84, 85 rib
91 O-ring
X, Xa power generating element

## Claims

1. A molten salt battery comprising a power generating element in which a separator containing a molten salt is interposed between a positive electrode and a negative electrode, and a battery container for housing the power generating element,
wherein a pressing member is provided on at least one of the positive electrode side and the negative electrode side in the battery container; and
the pressing member is configured to press the power generating element.

2. A molten salt battery comprising a power generating element in which a separator containing a molten salt is interposed between a positive electrode and a negative electrode, and a battery container for housing the power generating element,
wherein the battery container is a cylindrical body having an axial direction coincident with a direction in which the positive electrode and the negative electrode face each other; and
a bending portion that bends in a circumferential direction and that expands and contracts with expansion and contraction of the power generating element in the axial direction is formed on a peripheral surface of the cylindrical body.

3. A molten salt battery comprising a power generating element in which a separator containing a molten salt is interposed between a positive electrode and a negative electrode, and a battery container for housing the power generating element,
wherein the battery container is configured to press the power generating element from at least one of the positive electrode side and the negative electrode side.

4. The molten salt battery according to Claim 2 or 3, wherein the battery container has a convex curve at an inner side on at least one of the positive electrode side and the negative electrode side.

5. The molten salt battery according to Claim 2 or 3, wherein the battery container has a plurality of pressing pieces on an inner side of at least one of the positive electrode side and the negative electrode side so as to protrude therefrom.

6. The molten salt battery according to Claim 1, 4, or 5, wherein a transmission member that disperses and transmits pressing force is provided on at least one of the positive electrode side and the negative electrode side.

7. The molten salt battery according to Claim 6, wherein the transmission member has non-flexibility and is configured to press at least one of the positive electrode side and the negative electrode side by being urged by the pressing member, the convex curve, or the pressing pieces.

8. The molten salt battery according to any one of Claims 1 to 7, wherein the battery container is electrically connected to the positive electrode or the negative electrode.

9. The molten salt battery according to any one of Claims 1 to 8, wherein the battery container is formed by joining a first container half body on which a rib is formed on the positive electrode side or the negative electrode side to a second container half body.

10. The molten salt battery according to Claim 9,
wherein a plurality of compartments are formed in the battery container by the rib, and
the power generating element is disposed in each of the plurality of compartments.

11. The molten salt battery according to Claim 9 or 10, wherein
the first container half body and the second container half body are electrically insulated from each other, and
the first container half body is electrically connected to one of the positive electrode and the negative electrode and the second container half body is electrically connected to the other one of the positive electrode and the negative electrode.

12. The molten salt battery according to any one of Claims 1 to 8, wherein the battery container has a container main body having one side of a peripheral surface open and having an axial direction coincident with a direction in which the positive electrode and the negative electrode face each other, and a lid that seals an opening of the container main body.

13. The molten salt battery according to any one of Claims 1 to 12, wherein a power generating element group constituted by stacking a plurality of the power generating elements is housed.

14. The molten salt battery according to any one of Claims 1 to 12, wherein the power generating element is constituted by winding the positive electrode, the separator, and the negative electrode.
